# FASCICULE DE BREVET EUROPEEN

(11) **EP 0 673 040 B1**
(45) Date de publication et mention de la délivrance du brevet: **20.05.1998**
(21) Numéro de dépôt: 95400338.0
(22) Date de dépôt: 16.02.1995
(51) Int. Cl.: G21C 5/10

(54) **Cuve d'un réacteur nucléaire comportant des moyens de maintien de ses équipements internes inférieures et procédé d'ajustage des moyens de maintien**
Kernreaktorbehälter mit Untereinbauten-Retentionssystem und Retentionssystem-Einstellungsverfahren
Nuclear reactor vessel having lower internal hold-down means and hold-down means adjustment method

(30) Priorité: 15.03.1994 FR 9403004
(43) Date de publication de la demande: 20.09.1995
(73) Titulaire: FRAMATOME, 92400 Courbevoie (FR)
(72) Inventeur: Bougis, Jean-Claude, F-92400 Courbevoie (FR)
(74) Mandataire: Bouget, Lucien

(56) Documents cités:
- EP-A- 0 251 822
- FR-A- 2 585 870
- FR-A- 2 586 320
- US-A- 4 657 730

## Description

L'invention concerne une cuve d'un réacteur nucléaire à eau sous pression comportant des moyens de maintien et de supportage d'équipements internes de la cuve.

Les réacteurs nucléaires à eau sous pression comportent une cuve dont l'enveloppe de forme générale cylindrique est disposée avec son axe vertical dans la position de service de la cuve et qui est fermée par un fond bombé à son extrémité inférieure.

Le coeur du réacteur constitué par des assemblages combustibles juxtaposés est placé à l'intérieur de la cuve dans laquelle circule, pendant le fonctionnement du réacteur nucléaire, le fluide de refroidissement du réacteur qui vient en contact avec les assemblages du coeur pour assurer leur refroidissement et le transport de la chaleur produite par le coeur.

La cuve du réacteur nucléaire renferme des équipements internes appelés équipements internes inférieurs qui sont destinés à assurer le support et le maintien des assemblages du coeur à l'intérieur de la cuve.

Ces équipements internes inférieurs comportent en particulier une enveloppe cylindrique disposée de manière coaxiale par rapport à la cuve et une plaque de support de coeur de forte épaisseur solidaire de l'extrémité inférieure de l'enveloppe.

L'enveloppe du coeur est suspendue à l'intérieur de la cuve par sa partie supérieure et renferme un cloisonnement fixé sur la surface intérieure de l'enveloppe de coeur permettant de maintenir les assemblages combustibles qui reposent par leur partie inférieure sur une plaque inférieure de support du coeur.

Afin d'éviter des déplacements des équipements internes inférieurs suspendus par l'enveloppe de coeur à l'intérieur de la cuve du réacteur, on utilise des dispositifs de maintien de ces équipements internes permettant d'empêcher ou de limiter à une valeur très faible les déplacements de la partie inférieure des équipements internes dans des directions radiales et tangentielles.

Afin de faire face à toute situation accidentelle, on utilise également des dispositifs permettant de retenir les équipements internes inférieurs du réacteur, dans le cas où, de manière hautement improbable, il se produirait une rupture de l'enveloppe de coeur. Les éléments de retenue des équipements internes peuvent être réalisés sous la forme de moyens de supportage interdisant une chute des équipements internes inférieurs à l'intérieur de la cuve, d'une amplitude telle que les broches de centrage des assemblages combustibles du coeur se trouveraient désengagées des orifices de centrage et de positionnement prévus dans les embouts supérieurs des assemblages combustibles.

En effet, à l'intérieur de la cuve sont également disposés des équipements internes supérieurs comportant une partie inférieure constituée sous la forme d'une plaque supérieure de coeur dans laquelle sont fixées des broches de centrage des assemblages combustibles qui présentent une partie en saillie sous la plaque supérieure de coeur et qui sont engagées, lors de la mise en place des équipements internes supérieurs à l'intérieur de la cuve, dans des ouvertures ménagées dans les embouts des assemblages combustibles. De cette manière, on assure le positionnement, l'alignement et le centrage des assemblages combustibles dans lesquels on doit pouvoir déplacer ou faire retomber, en cas d'arrêt du réacteur nucléaire, un ensemble de barres de commande.

La fonction de retenue des équipements internes inférieurs en cas de rupture de l'enveloppe est généralement désignée comme fonction de supportage secondaire, le supportage des équipements internes et du coeur étant assuré, dans les conditions normales, par l'intermédiaire de l'enveloppe de coeur qui est suspendue à la cuve, au niveau de la bride de cuve sur laquelle est fixé le couvercle de fermeture de la cuve.

Dans le cas des cuves des réacteurs nucléaires à eau sous pression qui ont été construites suivant l'art antérieur et qui sont actuellement en exploitation, les deux fonctions, à savoir le maintien radial et tangentiel des équipements internes inférieurs en partie basse et le supportage secondaire de ces équipements internes sont assurées par deux dispositifs entièrement distincts.

Le maintien radial et tangentiel des équipements internes inférieurs est assuré par des clavettes qui limitent les déplacements en rotation des équipements internes supérieurs à une valeur très faible et qui empêchent le basculement de l'extrémité inférieure de ces équipements internes.

Le maintien radial et tangentiel est obtenu au moyen de six ensembles identiques comprenant chacun une clavette soudée sur le fond support des équipements internes inférieurs et une partie femelle fixée sur la cuve et destinée à recevoir avec un certain jeu une partie en saillie vers l'extérieur de la clavette. La partie femelle comprend elle-même une pièce massive soudée sur la paroi interne de la cuve et des glissières de maintien radial et tangentiel de la clavette fixées sur la pièce massive par des vis et des pions de positionnement. Le dispositif de maintien radial et tangentiel autorise les déplacements verticaux des équipements internes inférieurs à l'intérieur de la cuve et en particulier les déplacements verticaux de la partie inférieure des équipements internes dûs à des dilatations ou des retraits lors d'une mise en température ou d'un refroidissement du réacteur nucléaire.

Le supportage secondaire des équipements internes et du coeur du réacteur, dans le cas d'une rupture circonférentielle extrêmement improbable de l'enveloppe de coeur, est assuré par des colonnes de supportage fixées sur la face inférieure du fond support à l'une de leurs extrémités et sur la face supérieure d'une plaque d'attache à leurs autres extrémités, une plaque de base prenant alors appui sur le fond de la cuve et des amortisseurs fixés dans une disposition coaxiale par rapport aux colonnes de supportage, intercalés entre la plaque d'attache inférieure et la plaque de base.

Le supportage secondaire des équipements internes inférieurs et du coeur permet d'assurer le transfert et la répartition, par l'intermédiaire de la plaque de base, des efforts verticaux sur le fond de la cuve, d'absorber l'énergie libérée par la chute des équipements internes inférieurs et par la détente des ressorts de maintien des assemblages combustibles,en cas de rupture de l'enveloppe de coeur, et de limiter le déplacement vertical des assemblages combustibles pour éviter le désengagement des pions de centrage, tout en permettant,en fonctionnement normal, des déplacements dus à la dilatation différentielle dans la direction verticale, entre les équipements internes inférieurs et la cuve.

Les dispositifs de maintien radial selon l'art antérieur qui comportent à la fois des clavettes fixées en saillie par rapport à la partie périphérique de la plaque de support de coeur et des glissières fixées dans une pièce massive solidaire de la surface intérieure de la cuve sont très encombrants et perturbent l'écoulement de l'eau de refroidissement à l'intérieur de la cuve.

Le dispositif de supportage secondaire des équipements internes est d'autre part relativement complexe.

En outre, lors de l'installation sur site de la cuve du réacteur nucléaire, il est nécessaire de mettre en place les équipements internes inférieurs à l'intérieur de la cuve avant l'installation du supportage secondaire et des glissières de maintien radial.

Un trou d'homme est prévu au centre du fond support pour accéder au plénum inférieur de la cuve, afin de mesurer la distance réelle entre le fond support des équipements internes inférieurs et le fond de la cuve ainsi que les positions relatives dans les directions circonférentielle et radiale entre les clavettes de maintien solidaires de la plaque de support de coeur et les supports de glissières solidaires de la surface intérieure de la cuve.

En fonction des mesures, on réalise l'usinage de la plaque de base et des glissières pour obtenir à froid les jeux souhaités entre les pièces de maintien et de supportage.

Après mise en place de la plaque de base et des glissières, il faut effectuer une nouvelle présentation des équipements internes inférieurs pour vérifier les jeux en accédant par le trou d'homme.

Les opérations nécessaires pour la mise en place des équipements internes inférieurs et de leur dispositif de maintien et de supportage sont donc longues et complexes et nécessitent la présence d'un trou d'homme à la partie centrale du fond support.

Dans les US-A-4.657.730 et EP-A-0.251.822, on a décrit des moyens de maintien des équipements internes inférieurs d'un réacteur nucléaire, à l'intérieur de la cuve du réacteur qui comportent une pièce de support fixée sur la surface intérieure de la paroi de la cuve comportant une partie de forme prismatique destinée à maintenir les équipements internes inférieurs et à assurer leur retenue en cas de rupture de l'enveloppe de coeur, par l'intermédiaire d'une partie d'appui de la plaque de support de coeur. Dans le cas du US-A-4.657. 730, la plaque de support de coeur comporte une cavité usinée dans sa partie périphérique et ouverte vers le bas, dans laquelle s'engage une clavette portée par la pièce de support par l'intermédiaire de moyens d'amortissement destinés à absorber de l'énergie, en cas de chute des équipements internes inférieurs.

De tels moyens de maintien sont complexes et encombrants et la mise en place des équipements internes dans la cuve est une opération délicate, du fait qu'il faut aligner axialement les moyens de maintien fixés sur la paroi de la cuve et les moyens de maintien prévus sur la plaque de support de coeur.

Le but de l'invention est donc de proposer une cuve d'un réacteur nucléaire à eau sous pression comportant une paroi de forme générale cylindrique dont l'axe est vertical dans la position de service de la cuve, fermée par un fond bombé à son extrémité inférieure et renfermant une enveloppe cylindrique disposée coaxialement par rapport à la cuve et solidaire d'une plaque de support de coeur de forte épaisseur à sa partie inférieure, l'enveloppe et la plaque de support de coeur qui constituent des équipements internes inférieurs de la cuve du réacteur étant maintenues dans des directions perpendiculaires à l'axe de la cuve et en cas de rupture de l'enveloppe, par des moyens de maintien en prise avec la plaque de support de coeur, comportant au moins trois ensembles répartis autour de la périphérie de la plaque de support de coeur comprenant chacun :
- une pièce de support fixée sur la surface intérieure de la paroi comportant une partie d'extrémité de forme prismatique et disposée suivant la direction de l'axe de la cuve,
- une cavité dans la partie périphérique de la plaque de support de coeur ouverte vers l'extérieur et délimitée par une surface supérieure perpendiculaire à l'axe de la cuve usinée dans la plaque de support de coeur,
cette cuve comportant des moyens de maintien peu encombrants et de structure simple et pouvant être fabriqués et ajustés en effectuant des mesures ne nécessitant pas la présence d'un opérateur à l'intérieur de la cuve.

Dans ce but :
- la pièce de support est une clavette fixée sur la surface intérieure de la paroi au niveau de la plaque de support de coeur, et
- la cavité de la plaque de support de coeur est une encoche ouverte vers l'extérieur de la partie périphérique de la plaque de support de coeur pour recevoir avec jeu la partie d'extrémité de la clavette, en dessous de la surface supérieure de l'encoche perpendiculaire à l'axe de la cuve.

Afin de bien faire comprendre l'invention, on va maintenant décrire, à titre d'exemple non limitatif, en se référant aux figures jointes en annexe, une cuve équipée de moyens de maintien suivant l'art antérieur et une cuve selon l'invention et selon plusieurs modes de réalisation.

La figure 1 est une vue en coupe par un plan axial d'une cuve selon l'art antérieur, de ses équipements internes et de leurs moyens de maintien.

La figure 2 est une vue à plus grande échelle du détail 2 de la figure 1 représentant un ensemble de maintien radial des équipements internes inférieurs de la cuve.

La figure 3 est une vue en coupe par un plan horizontal de l'ensemble de maintien radial représenté sur la figure 2.

La figure 4 est une vue à plus grande échelle d'une partie de la figure 1 montrant des moyens de supportage secondaire des équipements internes inférieurs de la cuve représentée sur la figure 1.

La figure 5 est une vue en élévation et en coupe par un plan vertical, analogue à la vue de la figure 2, montrant un ensemble de moyens de maintien radial d'une cuve suivant l'invention.

La figure 6 est une vue suivant 6-6 de la figure 5.

La figure 7 est une vue en perspective d'une clavette d'un ensemble de maintien radial suivant l'invention et suivant une première variante de réalisation.

La figure 8 est une vue en élévation et en coupe analogue à la vue de la figure 5 montrant un ensemble de maintien radial d'une cuve suivant l'invention et suivant une seconde variante de réalisation.

La figure 9 est une vue en coupe suivant 9-9 de la figure 8.

La figure 10 est une vue en coupe et en élévation d'une partie d'un ensemble de maintien tel que représenté sur la figure 8 comportant un dispositif amortisseur suivant un premier mode de réalisation.

La figure 11 est une vue analogue à la vue de la figure 10 montrant une partie d'un ensemble de maintien radial comportant un amortisseur suivant un second mode de réalisation.

La figure 12 est une vue en coupe par un plan horizontal d'une clavette d'un moyen de maintien radial suivant l'invention, dans une phase de mesure pour ajustement des caractéristiques géométriques d'une glissière destinée à coopérer avec la clavette à l'intérieur d'une encoche.

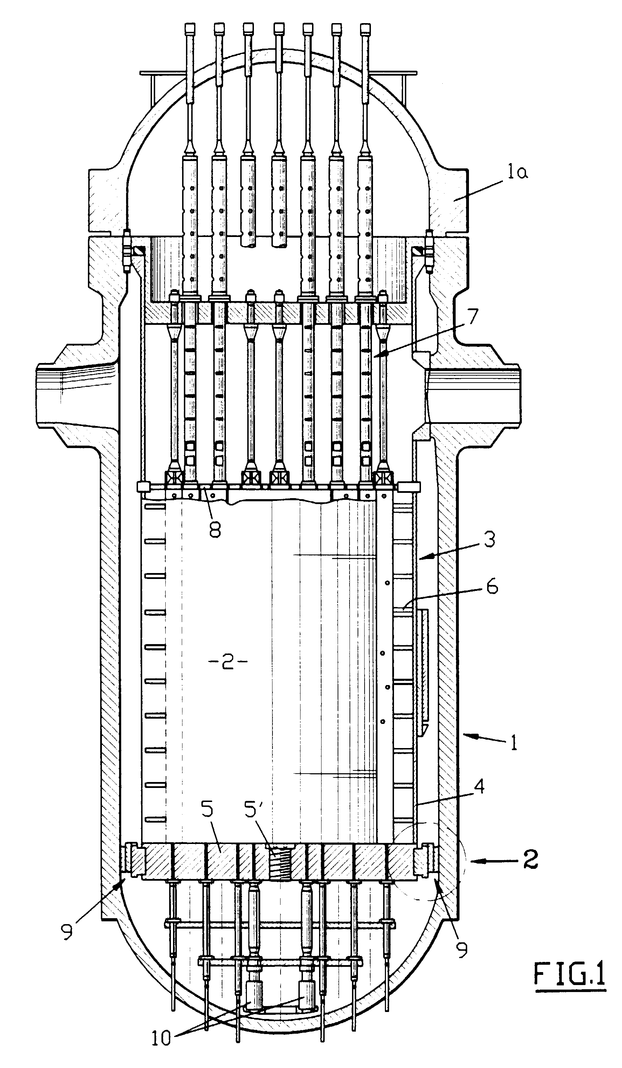

Sur la figure 1, on voit une cuve d'un réacteur nucléaire à eau sous pression désignée de manière générale par le repère 1.

La cuve 1 comporte une enveloppe de forme générale cylindrique qui est disposée avec son axe vertical dans la position de service de la cuve représentée sur la figure 1.

A l'intérieur de la cuve 1 est disposé le coeur 2 du réacteur nucléaire constitué par des assemblages de forme générale prismatique disposés à l'intérieur d'équipements internes appelés équipements internes inférieurs désignés de manière générale par le repère 3.

Les équipements internes inférieurs comportent en particulier une enveloppe de coeur 4 de forme générale cylindrique qui est fixée à l'intérieur de la cuve 1 dans une disposition coaxiale par rapport à la cuve, et une plaque de support de coeur 5 solidaire de l'enveloppe de coeur 4 à sa partie inférieure. Au centre de la plaque de support de coeur 5 est prévu un trou d'homme qui peut être fermé par un bouchon vissé 5'. On peut ainsi accéder au plénum inférieur de la cuve.

L'enveloppe de coeur 4 renferme un cloisonnement 6 destiné à maintenir les assemblages à la périphérie du coeur 2, à l'intérieur de l'enveloppe de coeur 4.

La cuve 1 renferme également des équipements internes supérieurs 7 comportant en particulier une plaque supérieure de coeur 8 qui constitue la partie inférieure des équipements internes supérieurs 7 et qui vient reposer sur la partie supérieure des assemblages du coeur 2 par l'intermédiaire de ressorts.

Les équipements internes supérieurs et les équipements internes inférieurs sont suspendus à l'intérieur de la cuve par leur partie supérieure qui est fixée sur la virole supérieure de la cuve 1 légèrement en-dessous du plan de raccordement du couvercle la de la cuve.

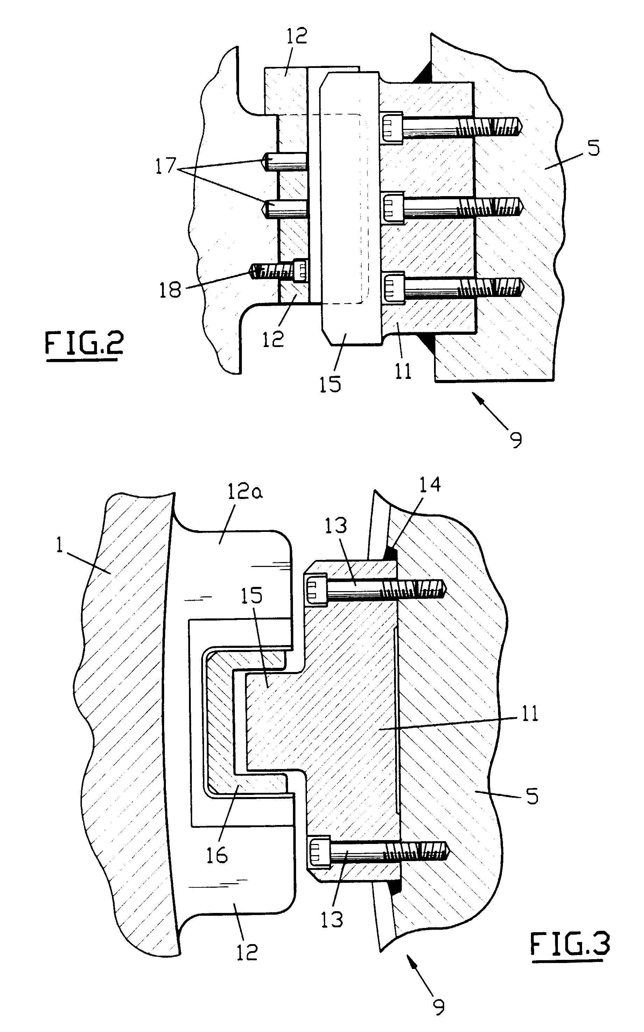

Les équipements internes inférieurs sont de plus maintenus à leur partie inférieure, au niveau de la plaque de support de coeur 5, par des dispositifs de maintien radial 9 qui seront décrits plus en détail en se référant aux figures 2 et 3.

On utilise généralement six dispositifs de maintien radial 9 répartis autour de la plaque de support de coeur 5 pour assurer le maintien des équipements internes inférieurs contre des déplacements en rotation autour de leur axe ou contre un déplacement radial excessif de la plaque de support de coeur 5, dans des conditions accidentelles, tout en autorisant des déplacements relatifs de la plaque de support de coeur 5 et de l'enveloppe de coeur 4 dans la direction axiale de la cuve, par exemple sous l'effet de dilatations différentielles.

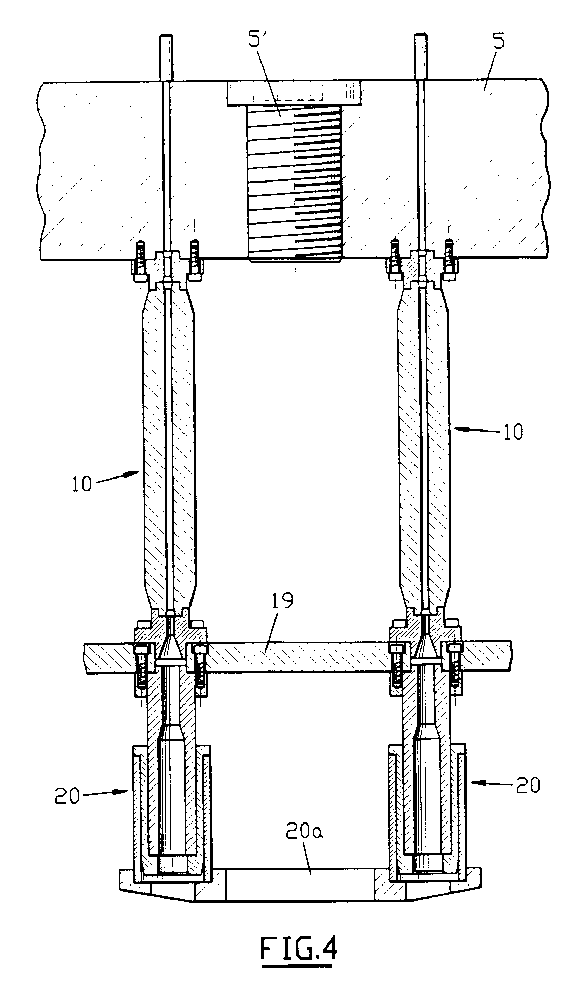

En outre, des colonnes de support 10 qui seront décrites plus en détail en se référant à la figure 4 sont intercalées entre le fond de la cuve et la plaque de support de coeur 5.

On dispose généralement quatre colonnes 10 sous la plaque de support de coeur 5, de manière à éviter une chute des équipements internes inférieurs 3 et du coeur 2, en cas de rupture de l'enveloppe de coeur 4, d'une amplitude telle que des broches de centrage solidaires de la plaque supérieure de coeur 8 ne se désengagent de logements prévus dans les embouts supérieurs des assemblages du coeur 2.

Comme il est visible sur les figures 2 et 3, chacun des dispositifs de maintien radial 9 comporte une première partie mâle 11 ou clavette fixée sur le bord périphérique externe de la plaque de support de coeur 5 et une seconde partie femelle fixée sur la surface intérieure de la paroi de la cuve, en vis-à-vis de la partie mâle 11. La clavette 11 est fixée par des vis 13 et par des soudures 14, à l'intérieur d'un embrèvement plat usiné dans le bord périphérique externe de la plaque de support de coeur 5. La clavette 11 comporte à son extrémité externe dirigée vers la surface intérieure de la paroi de la cuve 1, une languette 15 de forme sensiblement parallélépipédique dont l'axe longitudinal est dirigé suivant la direction verticale correspondant à l'axe de la cuve 1 et de l'enveloppe de coeur 4.

La partie femelle 12 du dispositif de maintien radial 9 comporte un support massif 12a fixé par soudure sur la surface intérieure de la cuve 1 et une glissière 16 en forme d'U fixée par des pions de positionnement 17 et des vis 18 à l'intérieur d'un embrèvement de forme parallélépipédique usiné dans le support massif 12a appelé support en M.

La languette 15 de la clavette 11 est reçue à l'intérieur de la glissière 16 avec un faible jeu dans la direction circonférentielle et avec un jeu plus important dans la direction radiale.

Généralement, les jeux circonférentiels de part et d'autre des faces latérales de la languette 15 à l'intérieur de la glissière 16 sont de l'ordre de 0,2 mm et le jeu radial entre l'extrémité extérieure de la languette 15 et le fond de la glissière 16 est de 5 mm.

Les faibles jeux circonférentiels permettent de maintenir la plaque support de coeur 5 et les équipements internes inférieurs en les empêchant de tourner autour de leur axe, tout en permettant des déplacements longitudinaux nécessités par exemple par des dilatations différentielles entre les équipements internes inférieurs et la cuve.

Le jeu radial permet de limiter les déplacements relatifs entre les équipements internes inférieurs et la cuve dans des conditions accidentelles, tout en évitant le coincement par dilatation radiale différentielle des équipements internes inférieurs à l'intérieur de la cuve.

La clavette 11 est généralement réalisée en acier inoxydable et la partie femelle 12 comportant la glissière 16 en alliage de nickel. Les surfaces en vis-à-vis de la languette 15 et de la glissière 16 peuvent être revêtues d'une couche de revêtement dur par exemple en Stellite.

Du fait que la partie femelle 12 fixée sur la surface intérieure de la paroi de la cuve 1 doit présenter une massivité relativement importante pour résister aux contraintes qui peuvent être transmises par la plaque de support de coeur et par la clavette 11 et qu'il en est de même de la clavette 11 fixée dans une disposition en saillie radiale par rapport à la plaque de support de coeur 11, les dispositifs de maintien 9 des équipements internes de la cuve sont encombrants en particulier dans la direction tangentielle.

En outre, ces dispositifs n'assurent pas le maintien des équipements internes inférieurs dans le cas d'une rupture de l'enveloppe de coeur.

Pour cela, on doit utiliser des colonnes de maintien telles que représentées sur la figure 4.

Les colonnes 10 appelées colonnes de supportage secondaires sont fixées chacune à leur partie supérieure sur la face inférieure de la plaque de support de coeur 5 et à leur partie inférieure sur une plaque d'attache inférieure 19 sensiblement parallèle à la plaque 5.

Des amortisseurs 20 sont fixés dans le prolongement des colonnes 10, entre la plaque d'attache inférieure 19 et une plaque de base 20a susceptible de venir en appui sur le fond de la cuve du réacteur nucléaire.

Les amortisseurs 20 comportent un corps fixé sur la plaque de base 20a et un piston relié par sa partie supérieure à la plaque d'attache inférieure 19.

Entre le corps d'amortisseur et le piston est intercalé un cylindre métallique qui subit une déformation par traction en cas de chute des équipements internes et du coeur se traduisant par un déplacement dans la direction axiale verticale de la plaque d'attache inférieure 19 par rapport à la plaque de base 20a reposant sur le fond de la cuve du réacteur nucléaire. La déformation plastique du cylindre de métal intercalé entre le corps et le piston des amortisseurs permet d'absorber l'énergie accompagnant la chute des équipements internes inférieurs. La plaque de base 20a permet de transmettre les efforts au fond de la cuve du réacteur nucléaire.

Les amortisseurs permettent de limiter les efforts supportés par les structures en cas de chute des équipements internes inférieurs et en particulier les efforts de compression subis par les colonnes 10.

Certaines des colonnes d'instrumentation 10 qui sont traversées sur toute leur longueur par un canal de direction axiale peuvent permettre le passage d'un tube-guide d'instrumentation, pour effectuer des mesures de flux neutronique ou des mesures de température dans le coeur.

Le supportage secondaire des équipements internes inférieurs et du coeur requiert donc la présence d'éléments supplémentaires relativement complexes.

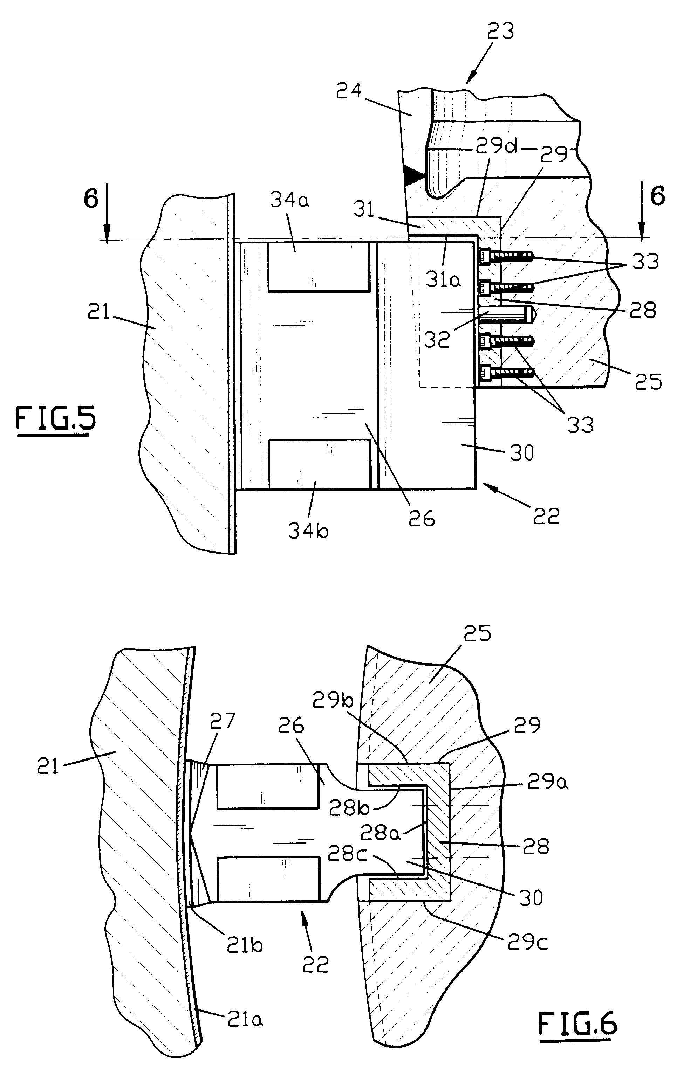

En se reportant aux figures 5 et 6, on va maintenant décrire des moyens de maintien des équipements internes inférieurs d'une cuve d'un réacteur nucléaire suivant l'invention contre des déplacements dans des directions radiales ou circonférentielles et dans le cas d'une chute des équipements internes et du coeur, par suite d'une rupture de l'enveloppe de coeur.

La cuve de réacteur nucléaire suivant l'invention est analogue à la cuve suivant l'art antérieur représentée sur la figure 1, à l'exception des dispositifs de maintien radial 9 et des colonnes 10 qui sont remplacés par des ensembles de maintien 22 assurant toutes les fonctions de maintien radial, circonférentiel et en cas de chute des équipements internes inférieurs 23.

Les équipements internes inférieurs 23 sont disposés à l'intérieur d'une cuve 21 dont la paroi présente une forme générale cylindrique identique à celle de la cuve 1 représentée sur la figure 1.

Les équipements internes inférieurs 23 comportent une enveloppe de coeur 24 à la partie inférieure de laquelle est fixée par soudure une plaque de support de coeur 25 de forte épaisseur.

Chacun des dispositifs de maintien 22 comporte une partie mâle ou clavette 26 fixée par une soudure 27 sur la surface intérieure de la paroi de la cuve 21.

La partie femelle du dispositif de maintien 22 est constituée par une glissière 28 fixée à l'intérieur d'une encoche 29 usinée dans la partie périphérique de la plaque de support de coeur 25.

La clavette 26 comporte une partie extérieure dirigée vers la plaque de support de coeur 25 destinée à venir s'engager dans la glissière 28 et constituant une languette 30 de forme sensiblement parallélépipédique.

L'encoche 29 usinée dans la plaque de support de coeur 25 et destinée à recevoir la glissière 28 comporte quatre faces planes usinées à l'intérieur de la plaque de support de coeur 25. Trois faces 29a, 29b et 29c de l'encoche 29 sont parallèles à l'axe de l'enveloppe de coeur 24 et de la cuve et une quatrième face 29d, située à la partie supérieure de l'encoche 29, est parallèle aux faces de la plaque de support 25, c'est-à-dire perpendiculaire à l'axe de l'enveloppe de coeur 24 et de la cuve 21.

L'encoche 29 est usinée dans la direction de l'épaisseur de la plaque de support de coeur 25, de manière à déboucher sur la face inférieure de la plaque 25. En revanche, à sa partie supérieure, l'encoche 29 est fermée par la face 29d.

La glissière 28 fixée dans l'encoche 29 comporte une partie profilée dont la section est en forme d'U dont les faces intérieures 28a, 28b et 28c sont parallèles respectivement aux faces de l'encoche 29a, 29b et 29c. La glissière 28 comporte également une partie supérieure plane 31 fixée dans la partie supérieure de l'encoche 29, contre la face supérieure 29d.

La face inférieure 31a de la plaque 31 de la glissière 28 qui est parallèle aux faces de la plaque de support de coeur 25 est dirigée vers l'intérieur de l'encoche 29.

La glissière 28 est fixée dans le fond de l'encoche 29, par des pions de positionnement tels que 32 et des vis telles que 33 dont les têtes sont en retrait par rapport aux faces d'appui de la glissière.

La languette 30 de la clavette 26 présente des dimensions telles qu'elle puisse être introduite dans le logement de la glissière 28 avec un certain jeu par rapport à chacune des faces 28a, 28b, 28c et 31a de la glissière. Dans le cas d'un réacteur nucléaire à eau sous pression de type courant, le jeu entre la face d'extrémité extérieure de la languette et le fond 28a de la glissière est généralement un peu supérieur à 4 mm et les jeux latéraux entre les côtés latéraux de la languette 30 et les faces latérales 28b et 28c de la glissière sont très faibles, de l'ordre de 0,2 mm.

Le jeu entre la face supérieure de la languette 30 et la face supérieure 31a de la glissière 28 est de l'ordre de 10 mm.

On utilise généralement six dispositifs de maintien tels que le dispositif 22 répartis autour de la plaque de support de coeur 25.

On peut ainsi assurer un maintien de la plaque de support de coeur 25 et des équipements internes 23 contenant le coeur du réacteur, dans des directions circonférentielles avec un très faible jeu permettant des déplacements longitudinaux des équipements internes inférieurs par rapport à la cuve, par exemple pour absorber des dilatations différentielles pendant le fonctionnement normal du réacteur nucléaire.

Les dispositifs 22 permettent également d'éviter un déplacement important des équipements internes inférieurs dans des directions radiales, dans le cas où les équipements internes inférieurs subissent des sollicitations dues à une cause accidentelle tendant à les déplacer dans des directions radiales de la cuve. Le jeu entre l'extrémité de la languette 30 et le fond de la clavette est d'autre part suffisant pour éviter tout coincement des équipements internes inférieurs à l'intérieur de la cuve.

En outre, dans le cas d'une rupture de l'enveloppe 24 des équipements internes inférieurs 23, après un déplacement dans la direction verticale d'une très faible amplitude, les équipements internes inférieurs 23 viennent en contact avec la face supérieure des languettes 30 des clavettes 26, par l'intermédiaire de la partie plane 31 de la glissière 28.

Les clavettes 26 assurent la retenue des équipements internes inférieurs avant que les pions de centrage de la plaque supérieure de coeur ne soient désengagés des embouts des assemblages.

Les clavettes 26 qui sont fixées solidement sur la surface intérieure de la cuve 21 par la soudure 27 permettent de supporter l'effort produit par la chute des équipements internes inférieurs 23 et leur retombée sur la surface supérieure des languettes 30. Les soudures 27 sont effectuées sur une couche de beurrage 21b déposée elle-même sur une couche de revêtement inoxydable 21a recouvrant la paroi interne de la cuve 21.

Les dispositifs de maintien 22 de la cuve selon l'invention ont l'avantage de ne comporter que la clavette 26, comme élément s'étendant dans l'espace annulaire entre la paroi de la cuve 21 et la plaque de support de coeur 25. La glissière 28 est entièrement logée dans l'encoche 29 et donc insérée totalement à l'intérieur du contour périphérique externe de la plaque de support de coeur 25.

Il en résulte un encombrement beaucoup plus faible des éléments des dispositifs de support dans l'espace annulaire compris entre la cuve et la surface périphérique de la plaque de support de coeur 25 prolongée, à sa partie supérieure, par l'enveloppe de coeur 24.

L'eau de refroidissement sous pression du réacteur nucléaire qui circule dans cet espace annulaire subit en conséquence une perte de charge beaucoup plus faible que dans le cas des dispositifs de maintien radial suivant l'art antérieur.

En outre, il est possible de prévoir des parties profilées 34a et 34b à la partie supérieure et à la partie inférieure du corps de la clavette 26 venant se placer dans l'espace annulaire. Les profils hydrauliques 34a et 34b de forme arrondie permettent de faciliter la circulation de l'eau et de réduire la perte de charge à une valeur faible.

De plus, la retenue des équipements internes inférieurs et du coeur en cas de rupture de l'enveloppe de coeur 24 est assurée par les dispositifs 22, de sorte qu'il n'est pas nécessaire de prévoir des colonnes de supportage secondaires en-dessous de la plaque de support de coeur 25 pour reprendre les efforts sur le fond de la cuve.

Dans le cas de la cuve suivant l'invention, les efforts sont repris directement par la paroi latérale cylindrique 21 de la cuve.

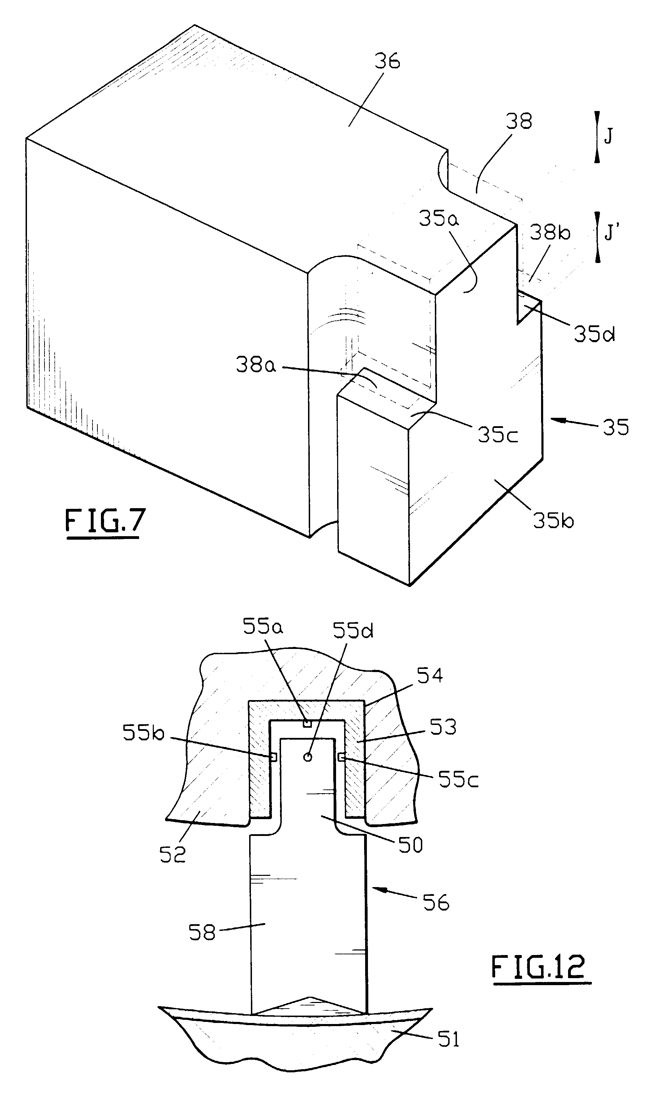

Sur la figure 7, on a représenté une variante de réalisation d'une clavette 36 qui peut constituer une partie d'un dispositif de maintien d'une cuve suivant l'invention analogue au dispositif 22 représenté sur les figures 5 et 6.

La clavette 36 comporte une languette 35 ayant une partie supérieure 35a présentant des dimensions sensiblement analogues à celles de la languette 30 de la clavette 26 représentée sur les figures 5 et 6 et une partie inférieure élargie 35b.

La partie supérieure 35a de la clavette 35 peut venir s'engager dans une glissière 38 analogue à la glissière 28 représentée sur les figures 5 et 6, avec de faibles jeux circonférentiels (de l'ordre de 0,2 mm) et avec un jeu radial par rapport au fond de la clavette légèrement supérieur à 4 mm.

La partie supérieure 35a de la clavette est séparée de la partie inférieure 35b par deux épaulements 35c et 35d parallèles à la face supérieure de la clavette qui vient se placer en-dessous de la plaque plane constituant la partie supérieure de la glissière 38, avec un jeu J de l'ordre de 10 mm.

La glissière 38 comporte deux parties latérales en saillie vers l'extérieur 38a et 38b qui viennent se loger dans deux embrèvements sur la face inférieure de la plaque de support de coeur de part et d'autre d'une encoche principale dans la plaque de support destinée à recevoir une partie de la glissière 38 qui est sensiblement analogue à la glissière 28 et qui reçoit la partie 35a de la languette 35 de la clavette 36.

Les parties 35a et 35b de la languette 35 sont dimensionnées de manière que les épaulements 35c et 35d se trouvent en-dessous des surfaces inférieures des parties 38a et 38b de la glissière à une distance J' sensiblement égale à J, cette distance étant généralement voisine de 10 mm.

De cette manière, en cas de chute des équipements internes, la retenue de la plaque de support de coeur est assurée non seulement par la surface supérieure de la languette 35 mais également par les épaulements élargis 35c et 35d.

On peut donc assurer la retenue des équipements internes inférieurs et du coeur sur une surface s'étendant sur toute la largeur de la clavette 36 dans la direction circonférentielle et pas seulement sur la largeur de la languette 35a introduite à l'intérieur de la glissière 38.

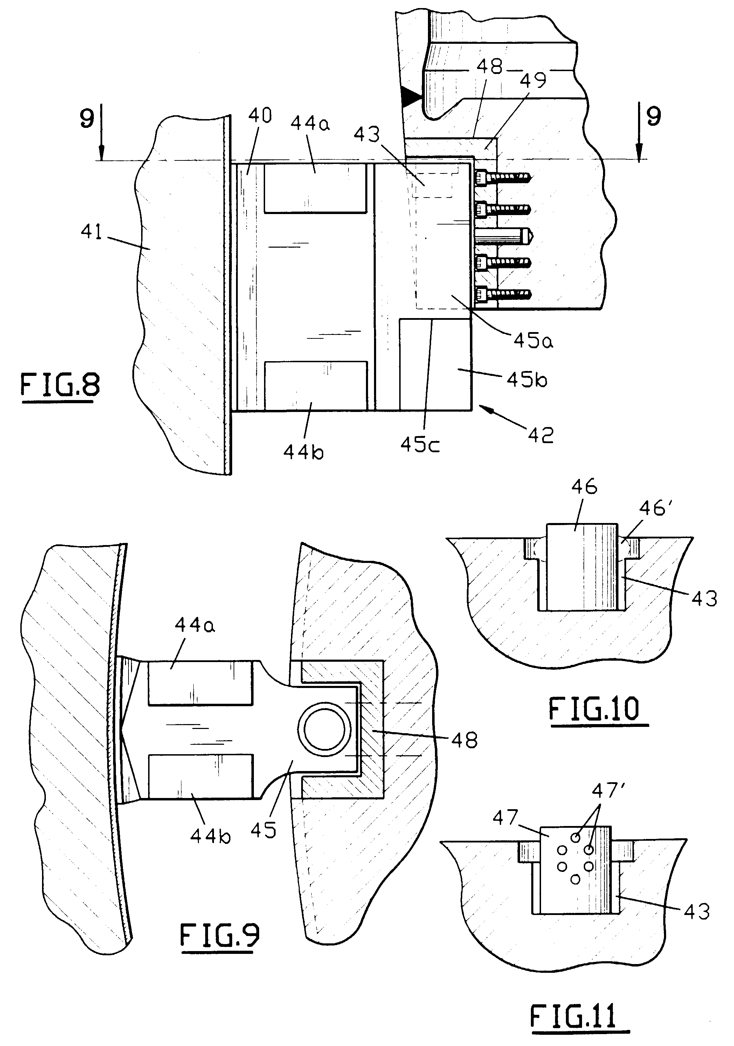

Sur les figures 8 et 9, on a représenté un dispositif de maintien 42 d'une cuve suivant l'invention dont la clavette 40 fixée sur la surface intérieure de la paroi 41 de la cuve est du type représenté sur la figure 7 et comporte une languette ayant une partie supérieure 45a engagée à l'intérieur d'une glissière 48 logée dans une encoche 49 de la plaque de support de coeur et une partie 45b de largeur supérieure à la partie 45a comportant des épaulements tels que 45c venant en-dessous de parties de la glissière 48 logée dans des embrèvements usinés dans la face inférieure de la plaque de support de coeur de part et d'autre de l'encoche 49.

De plus, la clavette 40 comporte des profils hydrauliques 44a et 44b à sa partie supérieure et à sa partie inférieure, pour réduire la perte de charge de l'eau circulant dans l'espace annulaire entre la paroi interne de la cuve 41 et les équipements internes supérieurs.

La partie supérieure 45a de la languette de la clavette 40 vient se placer à l'intérieur de la glissière 48, avec des jeux par rapport aux différentes faces de la glissière identiques aux jeux existant entre la clavette 30 et la glissière 28, tel que décrit plus haut.

De plus, la partie 45a de la languette de la clavette 40 est usinée pour présenter une cavité 43 de direction axiale comportant une partie supérieure à grand diamètre et une partie inférieure à plus faible diamètre séparées par un épaulement.

Comme il est visible sur la figure 10, on place une pièce tubulaire métallique 46 dont la longueur axiale est supérieure à la profondeur de la cavité 43, à l'intérieur de la cavité.

Dans le cas d'une chute des équipements internes inférieurs du réacteur nucléaire, les parties de la glissière 48 situées au-dessus de la face supérieure de la partie 45a de la languette et au-dessus des épaulements 45c retombent sur ses surfaces supérieures qui assurent la retenue de la plaque de support de coeur.

Le cylindre métallique 46 est écrasé et se déforme par compression ou flambage à l'intérieur de la partie élargie de la cavité 43, la partie déformée 46' de la pièce tubulaire 46 étant représentée en pointillés sur la figure 10.

On obtient ainsi un amortissement par absorption d'énergie, lors de la chute des équipements internes inférieurs, sous la forme d'énergie de compression des cylindres 46 associés à chacun des dispositifs de maintien 42.

Comme il est visible sur la figure 11, au lieu d'une enveloppe tubulaire pleine 46, on peut utiliser une enveloppe tubulaire 47 comportant des ouvertures traversantes 47'. L'effet d'écrasement de l'enveloppe tubulaire 47 lors de la chute des équipements internes inférieurs permet d'absorber une partie de l'énergie mise en oeuvre pendant la chute.

Sur la figure 12, on a représenté un dispositif de maintien 56 d'une cuve de réacteur nucléaire suivant l'invention comportant une clavette 58 solidaire de la surface intérieure de la paroi de la cuve comportant une partie d'extrémité 50 constituant une languette de forme sensiblement parallélépipédique dont la direction longitudinale est parallèle à l'axe de la cuve.

La clavette 58 constituant la partie mâle d'un dispositif de maintien 56 des équipements internes de la cuve du réacteur nucléaire comportant une plaque de support de coeur 52 a été représentée, pendant une opération de mesure et de réglage nécessaire pour réaliser l'usinage et l'ajustage d'une glissière qui doit être introduite dans une encoche 54 usinée dans la plaque de support de coeur 52, pour recevoir la languette 50 de la clavette 58 du dispositif de maintien 56.

Pour réaliser des mesures de jeux nécessaires pour l'usinage des glissières qui seront introduites dans chacune des encoches 54 de la plaque de support de coeur 52, dans un premier temps, on dispose dans chacune des encoches 54, une glissière étalon 53 présentant des dimensions standard.

On place les équipements internes inférieurs dans leur position de service à l'intérieur de la cuve en ayant soin de repérer leur position en orientation autour de l'axe de la cuve.

Les glissières provisoires 53 sont équipées de capteurs de distance tels que 55a, 55b, 55c et 55d sur quatre faces en regard des faces de la languette 50.

On mesure les distances Δx dans la direction circonférentielle, Δy dans la direction radiale et Δz dans la direction verticale entre les capteurs 55a, 55b, 55c et 55d et les faces correspondantes de la languette 50.

L'opération est réalisée simultanément pour chacun des dispositifs de maintien 56 disposés autour de la plaque de support de coeur 52 des équipements internes inférieurs.

Les mesures sont transmises et enregistrées en temps réel par un calculateur situé à l'extérieur de la cuve du réacteur nucléaire.

Les mesures sont utilisées pour déterminer les cotes et dimensions de chacune des glissières à placer dans chacune des encoches 54.

Les glissières sont usinées et mises en place et les équipements internes inférieurs sont replacés à l'intérieur de la cuve en prenant soin de respecter leur orientation d'origine autour de l'axe de la cuve. Du fait que les glissières ont été usinées en fonction des mesures réalisées précédemment, les jeux aussi bien dans la direction circonférentielle que dans la direction radiale présentent les valeurs optimales pour réaliser un maintien efficace des équipements internes inférieurs.

La réalisation précise des glissières et le respect des jeux ont été obtenus sans intervention d'un opérateur à l'intérieur de la cuve.

Il est bien évident que les jeux dans la direction verticale peuvent également être mesurés par des capteurs de distance, pendant la phase de présentation des équipements internes supérieurs, pour ajuster la dimension des parties des glissières destinées à venir en appui sur les parties de supportage des clavettes.

On peut donc réaliser l'ajustage et la mise en place des équipements internes dans la cuve, sans qu'un opérateur ne pénètre à l'intérieur de la cuve.

On peut donc éventuellement concevoir des cuves qui ne comportent pas de trou d'homme à la partie centrale du fond.

La cuve suivant l'invention comporte donc des moyens de maintien dans les directions radiale, circonférentielle et axiale d'une forme simple et d'un faible encombrement. Ces dispositifs ne produisent qu'une faible perte de charge et une faible perturbation sur le courant de fluide de refroidissement circulant autour des équipements internes inférieurs.

Bien entendu, l'invention ne se limite pas aux modes de réalisation qui ont été décrits.

C'est ainsi qu'on peut envisager l'utilisation d'un nombre de dispositifs de maintien constitués chacun par un ensemble d'une clavette et d'une glissière, différent de six et par exemple, en cas de besoin, on peut utiliser huit ensembles répartis autour de la plaque de support du coeur. Il est préférable de prévoir une disposition dissymétrique des ensembles de maintien autour de la plaque support de coeur, afin d'améliorer l'écoulement du fluide de refroidissement et notamment pour éviter la création de tourbillons en fond de cuve. Il est cependant nécessaire de prévoir au moins trois dispositifs de maintien.

Les clavettes des ensembles de maintien peuvent présenter une forme différente de celle qui a été décrite et en particulier, la languette qui est introduite dans la glissière peut présenter une forme prismatique différente de la forme parallélépipédique qui a été décrite.

Les glissières peuvent être réalisées d'une manière tout-à-fait différente de celle qui a été décrite.

Ces glissières peuvent être revêtues par des couches anti-usure d'un matériau dur tel qu'une stellite. Les glissières peuvent également être constituées par une simple couche déposée à l'intérieur d'une encoche usinée dans la partie périphérique de la plaque de support de coeur.

Dans le cas où la plaque de support de coeur pourrait être usinée avec une très grande précision, il serait possible d'assurer le maintien par l'intermédiaire des languettes des clavettes solidaires de la paroi de la cuve engagées dans des encoches usinées dans la partie périphérique de la plaque de support de coeur.

L'invention s'applique dans le cas de tout réacteur nucléaire à eau sous pression comportant une cuve dans laquelle sont disposés des équipements internes inférieurs comportant une plaque de support du coeur du réacteur nucléaire.

## Revendications

1. Cuve d'un réacteur nucléaire à eau sous pression comportant une paroi (1; 21; 41; 51) de forme générale cylindrique dont l'axe est vertical dans la position de service de la cuve, fermée par un fond bombé à son extrémité inférieure et renfermant une enveloppe cylindrique (4; 24) disposée coaxialement par rapport à la cuve et solidaire d'une plaque de support de coeur (5; 25; 52) de forte épaisseur à sa partie inférieure, l'enveloppe (4; 24) et la plaque de support de coeur (5; 25; 52) qui constituent des équipements internes inférieurs (3; 23) de la cuve du réacteur étant maintenues dans des directions perpendiculaires à l'axe de la cuve et en cas de rupture de l'enveloppe (4; 24) par des moyens de maintien en prise avec la plaque de support de coeur (5; 25; 52), comportant au moins trois ensembles (22; 56) répartis autour de la périphérie de la plaque de support de coeur (5; 25; 52) comprenant chacun :
- une pièce de support fixée sur la surface intérieure de la paroi (1; 21; 41; 51) comportant une partie d'extrémité de forme prismatique et disposée suivant la direction de l'axe de la cuve,
- une cavité (29; 49; 54) dans la partie périphérique de la plaque de support de coeur (5; 25; 52) ouverte vers l'extérieur et délimitée par une surface supérieure perpendiculaire à l'axe de la cuve usinée dans la plaque de support de coeur,
caractérisée par le fait que :
- la pièce de support est une clavette (26; 36; 40; 58) fixée sur la surface intérieure de la paroi (1; 21; 41; 51)au niveau de la plaque de support de coeur (5; 25; 52), et
- la cavité de la plaque de support de coeur est une encoche (29; 49; 54) ouverte vers l'extérieur de la partie périphérique de la plaque de support de coeur (5; 25; 52) pour recevoir avec jeu la partie d'extrémité (30; 45; 50) de la clavette, en dessous de la surface supérieure de l'encoche perpendiculaire à l'axe de la cuve.

2. Cuve suivant la revendication 1, caractérisée par le fait qu'une glissière (28; 38; 48) est fixée à l'intérieur de l'encoche (29; 49) dans la partie périphérique de la plaque de support de coeur (5; 25; 52).

3. Cuve de réacteur nucléaire suivant la revendication 2, caractérisée par le fait que la glissière (28; 38; 48) comporte une partie profilée en forme d'U suivant la direction de l'axe de la cuve et une partie plane (31) sensiblement parallèle aux faces de la plaque de support de coeur (5; 25; 52) et perpendiculaire à l'axe de la cuve, la partie d'extrémité (30; 35; 45; 50) de la clavette assurant le maintien dans des directions circonférentielle et radiale de la plaque de support de coeur (5; 25; 52), par l'intermédiaire des faces internes de la partie profilée de la glissière et le supportage de la plaque de support de coeur (5; 25; 52) et des équipements internes (23), par l'intermédiaire de la face de la partie plane (31) de la glissière dirigée vers l'intérieur de l'encoche (29).

4. Cuve suivant l'une quelconque des revendications 1, 2 et 3, caractérisée par le fait que la clavette (36) comporte une première partie d'extrémité (35a) destinée à venir s'engager avec jeu dans une encoche de la plaque de support de coeur (5; 25; 52) et une seconde partie d'extrémité (35b) ayant une largeur supérieure dans une direction circonférentielle de la plaque support de coeur, de manière à définir des épaulements (35c, 35d) à l'aplomb de la surface inférieure de la plaque support de coeur (5; 25; 52) pour assurer le maintien des équipements internes inférieurs (23) en cas de rupture de l'enveloppe de coeur (24), en complément d'une surface d'extrémité de la première partie (35a) de la clavette (36) disposée en-dessous de la surface supérieure de l'encoche ménagée dans le bord externe de la plaque de support de coeur (5, 25, 52).

5. Cuve suivant l'une quelconque des revendications 1 à 4, caractérisée par le fait que la clavette (40) comporte de plus une cavité (43) de direction axiale, de forme globalement cylindrique comportant une partie débouchant sur la surface supérieure de la clavette (40) de diamètre supérieur à la partie restante de la cavité, dans laquelle est introduite une pièce tubulaire (46) d'amortissement en métal ayant une longueur axiale supérieure à la profondeur de la cavité (43) de manière à se trouver en saillie au-dessus de la surface supérieure de la clavette (40) et à l'aplomb de la surface supérieure de l'encoche (49) contre laquelle est fixée une partie de la glissière (48).

6. Cuve suivant la revendication 5, caractérisée par le fait que la pièce tubulaire d'amortissement (47) comporte une paroi traversée par des ouvertures (47').

7. Cuve de réacteur nucléaire suivant l'une quelconque des revendications 1 à 6, caractérisée par le fait qu'une partie de la clavette (26; 40) disposée à l'extérieur de l'encoche (29; 49) de la plaque de support de coeur (25) comporte à son extrémité supérieure et à son extrémité inférieure, des surfaces profilées (34a, 34b, 44a, 44b) pour limiter la perte de charge du fluide de refroidissement circulant dans la cuve du réacteur nucléaire, dans un espace annulaire compris entre la surface intérieure de la paroi (21; 41) de la cuve et des équipements internes (23).

8. Cuve de réacteur nucléaire suivant l'une quelconque des revendications 1 à 7, caractérisée par le fait que les moyens de maintien comportent six ensembles répartis autour de la périphérie de la plaque de support de coeur (5; 25; 52) comportant chacun une clavette (26) et une encoche (29) dans le bord externe de la plaque de support de coeur.

9. Cuve de réacteur nucléaire suivant la revendication 8, caractérisée par le fait que les ensembles des moyens de maintien sont répartis de manière dissymétrique autour de l'axe de la paroi de la cuve (21; 41).

10. Procédé d'ajustage de moyens de maintien dans une cuve de réacteur nucléaire suivant l'une quelconque des revendications 2 et 3, caractérisé par le fait que dans chacune des encoches du bord externe de la plaque de support de coeur (52), est disposée une glissière provisoire (53) comportant des dimensions standard et munie de dispositifs de mesure de distance (55a, 55b, 55c, 55d) sur des faces internes destinées à être dirigées vers des faces correspondantes de la partie d'extrémité (50) d'une clavette (58),
- que les équipements internes à l'intérieur de la cuve du réacteur nucléaire dont la paroi (51) porte des clavettes (58), sont disposés de manière à engager chacune des glissières étalons (53) sur une partie d'extrémité (50) d'une clavette (58),
- que sont réalisées des mesures de distance entre les capteurs (55a, 55b, 55c, 55d) et des faces en regard de la partie d'extrémité (50) de la clavette (58),
- que les signaux de mesure sont transmis et enregistrés à l'extérieur de la cuve,
- que les dimensions de glissières permettant d'obtenir des jeux déterminés entre les faces de la partie d'extrémité (50) des clavettes (58) et les faces correspondantes des glissières sont calculées à partir desdites mesures de distance,
- que sont réalisées des glissières ayant les dimensions voulues,
- que les glissières sont fixées à l'intérieur des encoches (54) de la plaque de support de coeur (52), et
- que les équipements internes inférieurs sont placés à l'intérieur de la cuve du réacteur nucléaire.

## Patentansprüche

1. Druckwasserkernreaktorbehälter mit einer im allgemeinen zylindrisch geformten Wandung (1; 21; 41; 51), deren Achse in der Betriebsposition des Behälters senkrecht steht, der an seinem unteren Ende durch einen gewölbten Boden geschlossen ist und eine zylindrische Hülle (4; 24) einschließt, die koaxial in bezug auf den Behälter angeordnet ist und an ihrem unteren Abschnitt fest mit einer Reaktorkernträgerplatte (5; 25; 52) großer Dicke verbunden ist, wobei die Hülle (4; 24) und die Reaktorkernträgerplatte (5; 25; 52), die die unteren Einbauten (3; 23) des Reaktorbehälters bilden, in Richtung senkrecht zur Behälterachse und im Fall eines Bruchs der Hülle (4; 24) von Halteeinrichtungen im Eingriff mit der Reaktorkernträgerplatte (5; 25; 52) gehalten werden, die wenigstens drei um den Umfang der Reaktorkernträgerplatte (5; 25; 52) herum verteilte Anordnungen (22; 56) aufweisen, von denen jede aufweist:
- ein Trägerteil, das an der inneren Oberfläche der Wandung (1; 21; 41; 51) befestigt ist, wobei es einen prismenförmigen Endabschnitt aufweist und gemäß der Richtung der Behälterachse angeordnet ist,
- eine Ausnehmung (29; 49; 54) im Umfangsabschnitt der Reaktorkernträgerplatte (5; 25; 52), die nach außen hin geöffnet ist und durch eine obere, senkrecht zur Behälterachse verlaufende Fläche begrenzt wird, die in der Reaktorkernträgerplatte ausgebildet ist,
dadurch gekennzeichnet, daß:
- das Trägerteil ein Keil (26; 36; 40; 58) ist, der an der inneren Oberfläche der Wandung (1; 21; 41; 51) auf der Höhe der Reaktorkernträgerplatte (5; 25; 52) befestigt ist, und
- die Ausnehmung der Reaktorkernträgerplatte eine Kerbe (29; 49; 54) ist, die zum Äußeren des Umfangsabschnittes der Reaktorkernträgerplatte (5; 25; 52) hin offen ist, um mit Spiel den Endabschnitt (30; 45; 50) des Keils unterhalb der oberen, senkrecht zur Behälterachse verlaufenden Fläche der Kerbe aufzunehmen.

2. Behälter nach Anspruch 1, dadurch gekennzeichnet, daß eine Gleitschiene (28; 38; 48) im Inneren der Kerbe (29; 49) im Umfangsabschnitt der Reaktorkernträgerplatte (5; 25; 52) befestigt ist.

3. Kernreaktorbehälter nach Anspruch 2, dadurch gekennzeichnet, daß die Gleitschiene (28; 38; 48) einen U-förmigen Profilabschnitt gemäß der Richtung der Behälterachse und einen ebenen Abschnitt (31) aufweist, der im wesentlichen parallel zu den Flächen der Reaktorkernträgerplatte (5; 25; 52) und senkrecht zur Behälterachse verläuft, wobei der Endabschnitt (30; 35; 45; 50) des Keils für die Halterung in Umfangs- und Radialrichtungen der Reaktorkernträgerplatte (5; 25; 52) mittels innerer Flächen des Profilabschnittes der Gleitschiene und für die Abstützung der Reaktorkernträgerplatte (5; 25; 52) und der Einbauten (23) mittels der Fläche des ebenen Abschnittes (31) der Gleitschiene sorgt, die zum Inneren der Kerbe (29) hin gerichtet ist.

4. Behälter nach einem der Ansprüche 1, 2 oder 3, dadurch gekennzeichnet, daß der Keil (36) einen ersten Endabschnitt (35a), der dazu dient, mit Spiel in eine Kerbe der Reaktorkernträgerplatte (5; 25; 52) einzugreifen, und einen zweiten Endabschnitt (35b) aufweist, der in einer Umfangsrichtung der Reaktorkernträgerplatte breiter ist, so daß er Absätze (35c; 35d) senkrecht zu der inneren Oberfläche der Reaktorkernträgerplatte (5; 25; 52) bildet, um für die Halterung der unteren Einbauten (23) im Fall eines Bruchs der Hülle des Kerns (24) zu sorgen, in Ergänzung zu einer Endfläche des ersten Abschnittes (35a) des Keils (36), die unterhalb der oberen Fläche der Kerbe angeordnet ist, die im äußeren Rand der Reaktorkernträgerplatte (5; 25; 52) ausgespart ist.

5. Behälter nach einem der Ansprüche 1 bis 4, dadurch gekennzeichnet, daß der Keil (40) zusätzlich eine axial ausgerichtete Ausnehmung (43) von global zylindrischer Form mit einem Abschnitt aufweist, der in die obere Fläche des Keils (40) mündet und einen größeren Durchmesser als der restliche Abschnitt der Ausnehmung aufweist, in die ein rohrförmiges Dämpfungsteil aus Metall (46) mit einer axialen Länge eingeführt wird, die größer ist als die Tiefe der Ausnehmung (43), so daß es über die obere Fläche des Keils (40) hinausragt und sich senkrecht zur oberen Fläche der Kerbe (49) befindet, neben der ein Abschnitt der Gleitschiene (48) befestigt ist.

6. Behälter nach Anspruch 5, dadurch gekennzeichnet, daß das rohrförmige Dämpfungsteil (47) eine Wandung aufweist, die von Öffnungen (47') durchbrochen ist.

7. Kernreaktorbehälter nach einem der Ansprüche 1 bis 6, dadurch gekennzeichnet, daß ein Abschnitt des Keils (26; 40), der außerhalb der Kerbe (29; 49) der Reaktorkernträgerplatte (25) angeordnet ist, an seinem oberen und an seinem unteren Ende profilierte Oberflächen (34a; 34b; 44a; 44b) aufweist, um den Druckverlust der Kühlflüssigkeit zu begrenzen, die in dem Kernreaktorbehälter in einem ringförmigen Raum zirkuliert, der zwischen der inneren Fläche der Wandung (21; 41) des Behälters und den Einbauten (23) eingeschlossen ist.

8. Kernreaktorbehälter nach einem der Ansprüche 1 bis 7, dadurch gekennzeichnet, daß die Halteeinrichtungen sechs um den Umfang der Reaktorkernträgerplatte (5; 25; 52) herum verteilte Anordnungen aufweisen, von denen jede einen Keil (26) und eine Kerbe (29) im äußeren Rand der Reaktorkernträgerplatte aufweist.

9. Kernreaktorbehälter nach Anspruch 8, dadurch gekennzeichnet, daß die Anordnungen der Halteeinrichtungen unsymmetrisch um die Achse der Wandung des Behälters (21; 41) herum verteilt sind.

10. Verfahren zum Einstellen der Halteeinrichtungen in einem Kernreaktorbehälter nach Anspruch 2 oder 3, dadurch gekennzeichnet, daß in jeder der Kerben des äußeren Randes der Reaktorkernträgerplatte (52) eine vorläufige Gleitschiene (53) angeordnet wird, die Standardabmessungen aufweist und mit Entfernungsmessungseinrichtungen (55a; 55b; 55c; 55d) an inneren Flächen versehen ist, die dazu dienen, gegen entsprechenden Flächen des Endabschnittes (50) eines Keils (58) gerichtet zu werden,
- daß die Einbauten im Inneren des Kernreaktorbehälters, dessen Wandung (51) Keile (58) trägt, derart angeordnet sind, daß jede der Normgleitschienen (53) über einen Endabschnitt (50) eines Keils (58) greift,
- daß Entfernungsmessungen zwischen den Aufnehmern (55a; 55b; 55c; 55d) und den Flächen gegenüber dem Endabschnitt (50) des Keils (58) durchgeführt werden,
- daß die Meßsignale im Inneren des Behälters übertragen und aufgezeichnet werden,
- daß die Abmessungen der Gleitschienen, die es ermöglichen, festgestellte Spiele zwischen den Flächen des Endabschnittes (50) der Keile (58) und den entsprechenden Flächen der Gleitschienen zu erhalten, ausgehend von den Entfernungsmessungen berechnet werden,
- daß Gleitschienen mit den gewünschten Abmessungen gefertigt werden,
- daß die Gleitschienen im Inneren der Kerben (54) der Reaktorkernträgerplatte (52) befestigt werden, und
- daß die unteren Einbauten im Inneren des Kernreaktorbehälters angeordnet werden.

## Claims

1. Pressurised water nuclear reactor vessel having a wall (1; 21; 41; 51) of generally cylindrical shape of which the axis is vertical in the position of use of the vessel, closed by a convex base at its lower end and enclosing a cylindrical envelope (4; 24) arranged coaxially with respect to the vessel and connected to a core-supporting plate (5; 25; 52) of substantial thickness at its lower end, the envelope (4; 24) and the core-supporting plate (5; 25; 52) which constitute lower internal items of equipment (3; 23) of the reactor vessel being located in directions perpendicular to the axis of the vessel and in the event of rupture of the envelope (4; 24) by locating means acting on the core-supporting plate (5; 25; 52), comprising at least three assemblies (22; 26) spaced around the periphery of the core-supporting plate (5; 25; 52) and each comprising:
- a supporting member secured to the inside surface of the wall (1; 21; 41; 51) having an end portion of prismatic shape and arranged in the direction of the axis of the vessel,
- a cavity (29; 49; 54) in the peripheral part of the core-supporting plate (5; 25; 52), open towards the inside and bounded by an upper surface perpendicular to the axis of the vessel machined in the core-supporting plate,
- characterised by the fact that:
- the supporting member is a key member (26, 36, 40; 58) secured to the inside surface of the wall (1; 21; 41; 51) at the level of the core-supporting plate (5, 25; 52), and
- the cavity in the core-supporting plate is a notch (29; 49; 54) which is open towards the outside of the peripheral part of the core-supporting plate (5; 25; 52) to receive with clearance the end part (30; 45; 50) of the key member, underneath the upper surface of the notch perpendicular to the axis of the vessel.

2. Vessel according to claim 1, characterised by the fact that a slide (28; 38; 48) is secured to the inside of the notch (29; 49) in the peripheral part of the core-supporting plate (5; 25; 52).

3. Nuclear reactor vessel according to claim 2, characterised by the fact that the slide (28; 38; 48) has a portion which is shaped in the form of a U following the direction of the axis of the vessel and a flat portion (31) substantially parallel to the faces of the core-supporting plate (5; 25, 52) and perpendicular to the axis of the vessel, the end portion (30; 35; 45; 50) of the key member ensuring location in circumferential and radial directions of the core-supporting plate (5; 25; 52) through the intermediary of internal faces of the profiled portion of the slide and the supporting of the core-supporting plate (5; 25; 52) and of the internal equipment (23) through the intermediary of the face of the flat portion (31) of the slide directed towards the inside of the notch (29).

4. Vessel according to any one of claims 1, 2 and 3, characterised by the fact that the key member (36) has a first end portion (35a) designed to come into engagement with play in a notch in the core-supporting plate (5; 25; 52) and a second end portion (35b) having a greater width in a circumferential direction of the core-supporting plate such as to define shoulders (35c, 35d) at the point of meeting the lower surface of the core-supporting plate (5; 25; 52) to ensure the location of the lower internal equipment (23) in the event of rupture of the core envelope (24), in cooperation with an end surface of the first portion (35a) of the key member (36) arranged below the upper surface of the notch provided on the external rim of the core-supporting plate (5, 25, 52).

5. Vessel according to any one of claims 1 to 4, characterised by the fact that the key member (40) has in addition a cavity (43) extending in an axial direction and of a basically cylindrical shape having a portion opening into the upper surface of the key member (40) of a diameter greater than the rest of the cavity, in which there is introduced a metallic tubular shock-absorbing member (46) having an axial length greater than the depth of the cavity (43) in such a way as to project above the upper surface of the key member (40) and in engagement with the upper surface of the notch (49) against which a portion of the slide (48) is held.

6. Vessel according to claim 5, characterised by the fact that the tubulus shock-absorbing member (47) has a wall with openings (47') extending through it.

7. Nuclear reactor vessel according to any one of claims 1 to 6, characterised by the fact that a part of the key member (26; 40) arranged outside the notch (29; 49) in the core-supporting plate (25) has at its upper end and at its lower end profiled surfaces (34a, 34b, 44a, 44b) to restrict the loss of pressure of the cooling fluid circulating in the nuclear reactor vessel in an annular space present between the inside surface of the wall (21; 41) of the vessel and the internal equipment (23).

8. Nuclear reactor vessel according to any one of claims 1 to 7, characterised by the fact that the locating means comprise six assemblies spaced around the periphery of the core-supporting plate (5; 25; 52), each comprising a key member (26) and a notch (29) in the external rim of the core-supporting plate.

9. Nuclear reactor vessel according to claim 8, characterised by the fact that the assemblies of locating means are distributed in a non-symmetrical manner around the axis of the wall of the vessel (21; 41).

10. Process for adjusting locating means in a nuclear reactor vessel according to either of claims 2 and 3, characterised by the fact that in each of the notches in the outer rim of the core-supporting plate (52) there is arranged a temporary slide (53) having standard dimensions and equipped with arrangements for measuring the distance (55a, 55b, 55c, 55d) on the inside faces designed to be pointed towards the corresponding faces of the end portion (50) of a key member (58),
- that the items of internal equipment inside the nuclear reactor vessel of which the wall (51) carries the key member (58) are arranged in a manner such as to engage each of the gauging slides on an end part (50) of a key member (58),
- that the measurements of distance between the sensors (55a, 55b, 55c, 55d) and the faces opposite them on the end part (50) of the key member (58) are taken,
- that the measurement signals are transmitted and recorded outside the vessel,
- that the dimensions of the slides allow one to obtain predetermined clearances between the faces of the end portion (50) of the key members 58 and the corresponding faces of the slides based on the said measurements of distance,
- that slides are produced having the desired dimensions,
- that the slides are mounted inside the notches (54) in the core-supporting plate (52) and
- that the items of lower internal equipment are put in place inside the nuclear reactor vessel.
